# EUROPÄISCHE PATENTANMELDUNG

(11) **EP 4 464 981 A1**
(43) Veröffentlichungstag der Anmeldung: **20.11.2024**
(21) Anmeldenummer: 23173836.0
(22) Anmeldetag: 17.05.2023
(51) Int. Cl.: G01B 11/30

(54) **VERFAHREN, COMPUTERPROGRAMMPRODUKT, DATENTRÄGER UND VERWENDUNG**

(71) Anmelder: Schöck Bauteile GmbH, 76534 Baden-Baden (DE)
(72) Erfinder: Die Erfindernennung liegt noch nicht vor
(74) Vertreter: Paul & Albrecht Patentanwälte PartG mbB

(57) **Zusammenfassung**

Verfahren, insbesondere computergestütztes Verfahren, zur berührungslosen Messung der Rauhigkeit einer Bauteiloberfläche, insbesondere der Oberfläche eines Bauwerks oder eines Betonbauteils, bevorzugt der Oberfläche einer Schubfuge,
wobei eine beabstandet zur Bauteiloberfläche angeordnete Messeinrichtung (2) verwendet wird, welche ein Sendesignal (4) in Richtung der Bauteiloberfläche emittiert und ein Rücksignal (5) detektiert, welches durch Wechselwirkung des Sendesignals (4) mit der Bauteiloberfläche entsteht und durch welches die Oberflächentopographie der Bauteiloberfläche erfasst wird,
wobei, dass ein flächiges Sendesignal (4) in Richtung der Bauteiloberfläche emittiert wird und eine unmittelbare flächige Messung der Rauhigkeit der Oberfläche stattfindet.

## Beschreibung

Die vorliegende Erfindung betrifft ein Verfahren, insbesondere ein computergestütztes Verfahren, zur berührungslosen Messung der Rauhigkeit einer Bauteiloberfläche, insbesondere der Oberfläche eines Bauwerks oder eines Betonbauteils, bevorzugt der Oberfläche einer Schubfuge, wobei eine beabstandet zur Bauteiloberfläche angeordnete Messeinrichtung verwendet wird, welche ein Sendesignal in Richtung der Bauteiloberfläche emittiert und ein Rücksignal detektiert, welches durch Wechselwirkung des Sendesignals mit der Bauteiloberfläche entsteht und durch welches die Oberflächentopographie der Bauteiloberfläche erfasst wird.

Ferner betrifft die Erfindung ein Computerprogrammprodukt, sowie einen computerlesbaren Datenträger. Außerdem betrifft die Erfindung die Verwendung einer Messeinrichtung.

In verschiedenen technischen Bereichen spielt die korrekte Erfassung der Rauhigkeit (auch als Rauheit bezeichnet) einer Bauteiloberfläche eine große Bedeutung für die Gebrauchseigenschaften, insbesondere für die Festigkeit und/oder die weitere Verarbeitbarkeit. Eine hohe Rauhigkeit, d.h. eine relativ große Unebenheit der Oberfläche, bzw. des Oberflächenprofils, kann eine hohe Kerbwirkung verursachen und damit zur Rissbildung führen. Andererseits kann eine hohe Rauhigkeit zu einer mechanischen Verzahnung beitragen, wenn ein anderes Bauteil mit der Oberfläche in Kontakt gebracht wird. Eine zu geringe Rauhigkeit wiederum kann die Beschichtung von Bauteiloberflächen erschweren, da eine mechanische Verzahnung mit einer Beschichtung möglicherweise nicht stattfindet.

Ein technischer Bereich, in welchem die Rauhigkeit die weiteren Gebrauchseigenschaften erheblich beeinflusst, ist der Baubereich. Zum einen hat die Rauhigkeit von Bauteiloberflächen im Baubereich, beispielsweise von Oberflächen von Betonteilen, entscheidenden Einfluss auf die weitere Verarbeitbarkeit bzw. auf die Gebrauchseignung. Auf der einen Seite darf die Oberfläche nicht zu rauh sein, um gleichmäßige Beschichtungen aufbringen zu können. Eine zu geringe Rauhigkeit wiederum kann die Haftung von Beschichtungen, beispielsweise Farbschichten, verringern, da eine mechanische Verzahnung mit der Oberfläche des Betonbauteils nicht stattfinden kann. Des Weiteren schreiben technische Regelwerke oder bautechnische Zulassungen die Einhaltung bestimmter Rauhigkeitswerte vor.

Eine besondere Bedeutung hat die Oberflächenrauhigkeit bei Schubfugen. Wird ein Betonbauteil, beispielsweise ein auskragendes Betonbauteil, an einem Grundbauteil angebracht, kommen zwei Betonoberflächen miteinander in Kontakt und werden üblicherweise durch entsprechende Vorrichtungen, beispielsweise eine Bewehrung mit Betonstahl, aneinander gehalten. Dies kann auch beinhalten, dass ein vorgefertigtes Betonteil mit einer Oberfläche angegossen wird, d.h. Beton auf eine bestehende Oberfläche aufgegossen wird. Eine solche Verbindung muss im weiteren Gebrauch bestimmte Querkräfte übertragen, so dass eine Schubbeanspruchung auftritt. Für die Auslegung einer solchen Schubfuge oder Schubverbindung spielt deshalb die Kenntnis der Oberflächenrauhigkeit eine besondere Rolle. Sind die beiden Oberflächen, welche aneinander in Anlage gebracht werden, zu glatt, haben also eine zu geringe Rauhigkeit, so findet keine oder nur eine geringe mechanische Verzahnung statt. Damit müssen die auftretenden Querkräfte über andere Mittel, insbesondere über eine Bewehrung mit Betonstahl übertragen werden. Eine hohe Rauhigkeit führt hingegen zu einer mechanischen Verzahnung, die zumindest teilweise die auftretenden Querkräfte übertragen kann.

Wenn die Rauhigkeit der Oberflächen einer Schubfuge nicht bekannt ist, so wird für die statischen Berechnungen in der Regel davon ausgegangen, dass es sich um ideal glatte Oberflächen handelt und eine mechanische Verzahnung zwischen den Oberflächen nicht stattfindet. In diesem Fall muss die Bewehrung entsprechend umfangreich dimensioniert werden.

Um dieser Problematik Rechnung zu tragen, gibt es verschiedene Methoden, die Oberflächenrauhigkeit von Betonteilen zu ermitteln. Eine gängige Methode ist dabei das Sandflächenverfahren, welches häufig auch als Kaufmann-Verfahren bezeichnet wird und beispielsweise in DIN EN 13036-1-2010-10 beschrieben ist. Dabei wird eine bestimmte Menge an Sand mit einer definierten Korngröße, beispielsweise Quarzsand, auf die zu messende Oberfläche geschüttet und ohne Druck kreisförmig verteilt, bis die in der Oberfläche ausgebildeten Vertiefungen gerade eben gefüllt sind. Praktisch werden die auf der Oberfläche ausgebildeten Vertiefungen mit Sand befüllt. Je rauher die Oberfläche ist, desto mehr Sand ist erforderlich, um die Vertiefungen zu füllen. Aus dem Durchmesser der vom Sand bedeckten Fläche kann auf eine mittlere Rauhtiefe R_{T} geschlossen werden.

Auch wenn sich dieses Verfahren grundsätzlich bewährt hat, da es sich auf einfache Weise ohne großen apparativen Aufwand durchführen lässt, so wird jedoch zu Teilen als nachteilig angesehen, dass es sich nur an horizontalen oder allenfalls geringfügig geneigten Oberflächen durchführen lässt. Je nach Ausgestaltung der Oberflächentopographie bei gleichen Abständen zwischen maximaler Profilhöhe und minimaler Profilhöhe kann das Sandflächenverfahren zu unterschiedlichen Ergebnissen führen, je nachdem wie fein die Oberflächenstruktur gestaltet ist. Das Verfahren ist mit einem relativ hohen manuellen Aufwand verbunden, so dass es sich nicht für eine Kontrolle bei der Serienfertigung von Bauteilen eignet. Außerdem wird bedingt durch den Ablauf des Verfahrens nur ein kleiner Bereich der Bauteiloberfläche messtechnisch erfasst.

Daneben gibt es Versuche, zur Messung der Rauhigkeit einer Bauteiloberfläche eine Messeinrichtung zu verwenden, welche ein Sendesignal in Form eines punktförmigen oder linienförmigen Laserstrahls in Richtung der Bauteiloberfläche emittiert und ein Rücksignal detektiert, welches durch Wechselwirkung des Laserstrahls mit der Bauteiloberfläche entsteht und durch welches die Oberflächentopographie der Bauteiloberfläche erfasst wird. Ein solches Abtasten der Oberfläche mit einem linienförmigen Laserstrahl ist jedoch mit einem hohen Zeitaufwand von üblicherweise mehreren Minuten verbunden. Darüber hinaus hat sich gezeigt, dass ein solcher linienförmiger Laserstrahl gerade bei Baustellenanwendungen oder in Fertigteilwerken problematisch ist, da sein Strahlverlauf durch Feuchtigkeit, Vibrationen und Staubentwicklung häufig gestört wird, so dass sich erhebliche Messungenauigkeiten ergeben können, gerade wenn die Messung einen längeren Zeitraum in Anspruch nimmt. Mit anderen Worten haben die konkreten Umgebungsbedingungen einen starken Einfluss auf die Genauigkeit der Messung.

Vor diesem Hintergrund besteht die Aufgabe der vorliegenden Erfindung darin, ein Verfahren, ein Computerprogrammprodukt, einen maschinenlesbaren Datenträger und eine Verwendung einer Messeinrichtung zu schaffen, welche ein sicheres und schnelles Messen der Rauhigkeit einer Bauteiloberfläche ermöglichen und insbesondere die zuvor genannten Nachteile vermeiden.

Diese Aufgabe ist bei einem Verfahren der eingangs genannten Art dadurch gelöst, dass ein flächiges Sendesignal in Richtung der Bauteiloberfläche emittiert wird und eine unmittelbare flächige Messung der Rauhigkeit der Bauteiloberfläche stattfindet.

Der Erfindung liegt die grundsätzliche Überlegung zugrunde, durch eine schnelle, flächige Messung der Oberflächenrauhigkeit ein zuverlässiges und schnelles Messverfahren auch für große Bauteile mit Längen von mehreren Metern zu schaffen. Unter einer unmittelbaren flächigen Messung ist dabei zu verstehen, dass kein langwieriges, sukzessives Abtasten der Oberfläche mit einem linien- oder punktförmigen Laserstrahl stattfindet, sondern direkt, d.h. zu einem Zeitpunkt, ein flächiger Bereich der Bauteiloberfläche erfasst wird. Insbesondere kann die gesamte Oberfläche eines Bauteils oder einer Seite eines Bauteils erfasst werden. Ein flächiges Sendesignal ist dadurch gekennzeichnet, dass es eine Fläche auf der Bauteiloberfläche abdeckt. Dabei kann auch eine Vielzahl von Punkten, die sich flächig auf der Bauteiloberfläche verteilen, abgedeckt werden. Bevorzugt wird die Messeinrichtung während der Durchführung der Messung nicht relativ zum Bauteil bewegt. Dadurch kann der kinematische Aufwand verglichen mit einem linienförmigen, laserbasierten Abscannen verringert werden.

Dadurch entstehen weniger Störungen bei der Messung, beispielsweise durch Staubentwicklung oder Feuchtigkeit und sich dadurch über den Zeitraum verändernden Messbedingungen. Mit anderen Worten ist die Messung deutlich robuster, da sie einen kürzeren Zeitraum in Anspruch nimmt und somit durch unterschiedliche Bedingungen auf der Baustelle, wie beispielsweise Staubentwicklung und Beleuchtungsbedingungen, nicht verfälscht wird.

Durch das schnelle Messen kann jedes Bauteil, welches beispielsweise in einem Fertigteilwerk hergestellt wird, im Hinblick auf die Rauhigkeit vermessen werden. Liegt die Kenntnis der Rauhigkeit bei jedem einzelnen Bauteil vor, kann die erforderliche Bewehrung, welche beispielsweise beim Anbau des Bauteils an einem Bauwerk verwendet wird, individuell angepasst werden. Es kann somit eine maßgeschneiderte Bewehrung erstellt werden, welche die Rauheit des Bauteils berücksichtigt. Dadurch kann die Menge an Betonstahl für die Statik reduziert werden.

Das schnelle Messverfahren ermöglicht auch eine 100%- Prüfung von Bauteilen in einer Serienfertigung, beispielsweise in Fertigteilwerken. Die Einhaltung von technischen Regelwerken, z.B. Normen, oder bautechnischen Zulassungen kann zuverlässig geprüft und umfassend dokumentiert werden. Die Qualität der hergestellten Bauteile, bzw. der Füge- oder Schubverbindungen wird im Ergebnis deutlich verbessert.

Gemäß einer weiteren Ausgestaltung des erfindungsgemäßen Verfahrens erfolgt die Messung der Rauhigkeit durch eine optische Abstandsmessung, insbesondere durch eine Lidar-Messung. Bei einer optischen Abstandsmessung wird von der Messeinrichtung ein optisches Signal emittiert und ein davon resultierendes Rücksignal erfasst. Hierbei kann es sich um ein Sendemuster handeln.

Bei Lidar, welches die Abkürzung für die englische Begrifflichkeit " Light Detection and Ranging" ist, handelt es sich eine Form des dreidimensionalen, optischen Scannens von Oberflächen. Über eine solche insbesondere laserbasierte optische Abstandmessung kann mit einer hohen Genauigkeit eine Oberflächentopographie und damit die Rauhigkeit einer Oberfläche erfasst werden. Anstelle von Radiowellen, wie es bei einer Radarmessung der Fall ist, werden bei einer Lidar-Messung Lichtstrahlen, insbesondere monochromatische Lichtstrahlen oder Laserstrahlen, verwendet. Prinzipiell kann auch eine Radar-Messung durchgeführt werden.

Das Sendesignal kann in Form von Laserstrahlen und/oder Radarstrahlen emittiert werden. Möglich ist auch, dass das Sendesignal nicht in Form von Laserstrahlen emittiert wird. Laserstrahlen zeichnen sich im Gegensatz zu anderen Lichtquellen durch eine hohe Kohärenz, eine hohe Intensität und ein monochromatisches Licht aus.

Gemäß einer bevorzugten Ausführungsform wird ein rasterförmiges, insbesondere ein rechteckrasterförmiges Sendesignal emittiert. Mit anderen Worten wird auf der Oberfläche, deren Kontur vermessen werden soll, ein Sendesignal auf eine Vielzahl von Punkten gerichtet. Praktisch wird die zu vermessende Oberfläche in eine Vielzahl von Punkten unterteilt. An jedem Punkt wird die Lage der Oberfläche vertikal zur Erstreckung der Oberfläche ermittelt. Somit entsteht datentechnisch eine Punktwolke, d.h. jedem Punkt auf der (zweidimensionalen) Oberfläche wird ein Wert für die Position senkrecht zur Erstreckung der Oberfläche zugeordnet. Aus der jeweiligen Lage senkrecht zur Erstreckung der Oberfläche kann vor dem Hintergrund der Vielzahl der Punkte ein Rückschluss auf die Rauhigkeit gezogen werden.

Bevorzugt ist die Rasterweite des Sendesignals kleiner als 10 cm, insbesondere kleiner als 5 cm, bevorzugt kleiner als 3 cm, besonders bevorzugt kleiner als 1 cm, weiter bevorzugt kleiner als 5 mm, kleiner als 3 mm, kleiner als 2,5 mm, kleiner als 2 mm, kleiner als 1,5 mm oder kleiner als 1 mm. Je kleiner die Rasterweite des Sendesignals ist, desto höher ist die erfasste Auflösung, auf deren Basis dann ein Rückschluss auf die Rauhigkeit der Bauteiloberfläche vorgenommen werden kann.

In weiterer Ausgestaltung kann das Sendesignal in Form von elektromagnetischer Strahlung, insbesondere von elektromagnetischer Strahlung mit einer Wellenlänge zwischen 400 nm und 780 nm, emittiert werden. Die Messeinrichtung kann somit dadurch gekennzeichnet sein, dass sie eine Sendeeinrichtung zum Emittieren elektromagnetischer Strahlung aufweist. Bevorzugt handelt es sich dabei um elektromagnetische Strahlung im für das menschliche Auge sichtbaren Bereich.

Das Erfassen der Lage der Oberfläche senkrecht zur Erstreckung der Oberfläche kann mit einer Genauigkeit von weniger als 5 mm, insbesondere weniger als 3 mm, bevorzugt weniger als 2 mm, bevorzugt weniger als 1 mm oder weniger als 0,5 mm, weiter bevorzugt mit einer Genauigkeit von weniger als 0,3 mm oder weniger als 0,2 mm erfolgen. Durch eine derartige Genauigkeit lässt sich ein exakter Rückschluss auf die Oberflächenrauhigkeit des Bauteils ziehen.

In konkreter Ausgestaltung kann das Sendesignal einen Sendeimpuls oder mehrere nacheinander emittierte Sendeimpulse umfassen. Dementsprechend ist es möglich, dass das von einem Sendeimpuls entstehende Rücksignal ausgewertet wird. Möglich ist auch, dass eine Vielzahl von Sendeimpulsen in Richtung der Oberfläche des Bauteils gesendet wird. Der Sendeimpuls oder die Sendeimpulse können mit sich verändernder Richtung von einer Sendeeinheit einer Messeinrichtung emittiert werden. Das bedeutet, dass praktisch ein sukzessives flächiges Abscannen bzw. Abtasten der Oberfläche stattfindet.

Das Erfassen der Oberflächentopographie kann mehrere Einzelmessungen umfassen. Das bedeutet, dass praktisch die gleiche Messung mehrfach wiederholt wird. Dadurch können Störungen, welche auf Baustellen beispielsweise durch Staubentwicklung oder Vibrationen auftreten, herausgerechnet werden. Dementsprechend kann basierend auf mehreren Einzelmessungen, wobei jede Einzelmessung datentechnisch eine Punktwolke erzeugen kann, ein Endergebnis des Erfassens der Oberflächentopographie des Bauteils ermittelt werden.

Als Rücksignal kann das an der Bauteiloberfläche reflektierte und/oder das von der Bauteiloberfläche rückgestreute Sendesignal detektiert werden. Gemäß einer Ausführungsform kann die Laufzeit (Time of Flight - TOF) des Sendesignals und des Rücksignals ermittelt werden. In diesem Fall kann aus der Laufzeit direkt auf die Distanz, welche das Sendesignal und das Rücksignal zurückgelegt haben, geschlossen werden, woraus wiederum der Abstand der Oberfläche des Bauteils von der Messeinrichtung ermittelt werden kann und somit die Lage der Oberfläche an dem jeweiligen Punkt.

Während des Vermessens kann die Messeinrichtung, insbesondere eine das Sendesignal emittierende Sendeeinheit und/oder eine das Rücksignal detektierende Empfangseinheit der Messeinrichtung in einem Abstand von mindestens 1 m, bevorzugt mindestens 2 m, weiter bevorzugt mindestens 3 m oder mindestens 5 m, und/oder höchstens 8 m, bevorzugt höchstens 6 m zur Oberfläche des Grundbauteils angeordnet sein. Derartige Abstände haben sich als vorteilhaft herausgestellt, um einerseits eine ausreichende Messgenauigkeit zu erzielen und gleichzeitig eine hinreichend große Fläche vermessen zu können.

Zum Detektieren des Rücksignals kann/können mindestens eine Kamera, bevorzugt mehrere voneinander beabstandete Kameras, bevorzugt genau zwei Kameras verwendet werden. Die mindestens eine Kamera kann dabei in an sich bekannter Weise als Digitalkamera ausgebildet sein. Die mindestens eine Kamera kann Teil der Empfangseinheit der Messeinrichtung sein oder die Empfangseinheit bilden. Mehrere voneinander beabstandete Kameras, insbesondere zwei voneinander beabstandete Kameras sind vorteilhaft, um die Lage der Oberfläche im Raum ermitteln zu können. Sie funktionieren praktisch wie eine Stereokamera. Beispielsweise kann ein Zeitversatz, mit dem ein rückgestreutes oder reflektiertes Sendesignal, welches ein Rücksignal bildet, von den Kameras detektiert wird, zur Bestimmung der Position herangezogen werden. Bei den Kameras kann es sich um TOF- Kameras handeln, welche auch als PMD-Kameras bezeichnet werden. Derartige Kameras können in der Lage sein, die ganze Oberfläche oder zumindest einen Bereich der Oberfläche des Bauteils auf einmal aufzunehmen, so dass eine zeitintensive punkt- oder linienförmige Abtastung nicht erforderlich ist.

Dementsprechend kann die Messeinrichtung eine Sendeeinheit und eine Empfangseinheit enthalten. Diese können integral in einem gemeinsamen Gehäuse der Messeinrichtung untergebracht sein. Prinzipiell möglich ist auch, dass die Sendeeinheit und die Empfangseinheit mit mindestens einer Kamera unabhängig voneinander in einem entsprechenden Abstand zu der zu vermessenden Oberfläche des Grundbauteils positioniert werden.

Ausgehend von dem detektierten Rücksignal kann ein Rauhigkeitswert, insbesondere die Profilkuppenhöhe R_{P} oder die Rauhigkeit nach Kaufmann R_{T}, bevorzugt in einer Rechnereinheit der Messeinrichtung, ermittelt werden. Hierzu kann ein mathematischer Algorithmus verwendet werden, durch welchen das dreidimensional erfasste Rauhigkeitsprofil in eine Profilkuppenhöhe bzw. einen anderen Rauhigkeitswert umgerechnet wird. Der Algorithmus kann derart ablaufen, dass entlang einer Schnittlinie oder entlang mehrerer Schnittlinien jeweils ein Linienprofil ausgewertet wird. Möglich ist auch, dass der Algorithmus derart abläuft, dass eine direkte flächige Auswertung stattfindet, beispielsweise indem ein flächiges Integral der Profilhöhe errechnet wird oder eine Summe über eine Vielzahl von flächig angeordneten Punkten ermittelt wird. Der entsprechende Rauhigkeitswert kann prinzipiell auch auf einem externen Rechner, welcher bevorzugt drahtlos oder kabelgebunden mit der Messeinrichtung verbunden ist, ermittelt werden.

Bei der Ermittlung des Rauhigkeitswerts kann die Konsistenz des Betons und/oder der Aushärtegrad des Betonbauteils berücksichtigt werden. Entsprechende Werte können über ein mit der Messeinrichtung, insbesondere mit der Rechnereinheit der Messeinrichtung, gekoppeltes Eingabegerät manuell jedem Bauteil zugeordnet eingegeben werden. Möglich ist auch eine automatisierte Erfassung solcher Parameter.

Der ermittelte Rauhigkeitswert kann dem vermessenen Bauteil, insbesondere über eine Identifikation des Bauteils, bevorzugt über eine Identifikationsnummer oder -bezeichnung, auf einem Speichermedium zugeordnet werden. Der Rauhigkeitswert kann auch an ein Speichermedium zum Zuordnen zu dem vermessenen Bauteil übermittelt werden. Dadurch kann individuell jedem einzelnen vermessenen Bauteil ein Rauhigkeitswert zugeordnet werden und dieser kann für Dokumentationszwecke und/oder für die weitere Auslegung oder Dimensionierung gespeichert werden. Ausgehend von dem ermittelten Rauhigkeitswert kann auch eine Dimensionierung einer (Betonstahl-)Bewehrung vorgenommen werden. Mit anderen Worten kann der ermittelte Rauhigkeitswert herangezogen werden, um die vorgesehene Bewehrung entsprechend anzupassen, so dass die Bewehrung im Prinzip maßgeschneidert auf das jeweilige Bauteil angepasst wird, was zu erheblichen Materialeinsparungen führen kann. Möglich ist auch, dass ausgehend von dem ermittelten Rauhigkeitswert ein vorhandener Bewehrungsplan angepasst wird. Das Dimensionieren bzw. Anpassen eines Bewehrungsplans kann automatisiert erfolgen.

Der ermittelte Rauhigkeitswert kann an ein Visualisierungsgerät, insbesondere ein Tablet oder Smartphone, bevorzugt drahtlos übermittelt werden.

In einer weiteren Ausgestaltung kann vor der Messung der Rauhigkeit ein Kalibrierungsschritt durchgeführt werden. Das bedeutet, dass vor der eigentlichen Rauhigkeitsmessung in einem Kalibrierungsschritt die Messeinrichtung auf das zu vermessende Bauteil und insbesondere dessen Relativposition zur Messeinrichtung kalibriert wird. Dazu kann ein Raster- Reflektionsverfahren verwendet werden, bei welchem ein insbesondere optisches Sendemuster auf die Bauteiloberfläche projiziert wird und ein Empfangsmuster erfasst wird. Durch eine solche Kalibrierung kann beispielsweise eine Neigung der Oberfläche oder eine sich über die Oberfläche verändernde Oberflächenkontur ermittelt werden und in die dann im nächsten Schritt erfassten Rauhigkeitswerte eingerechnet werden. Dadurch können Fehler und Ungenauigkeiten bei der Messung der Rauhigkeit minimiert oder ausgeschlossen werden. Gegebenenfalls kann auch die Positionierung der Messeinrichtung relativ zum zu vermessenden Bauteil basierend auf einer solchen Kalibrierung angepasst werden.

Um den Einfluss von Störungen durch sich verändernde Umgebungsbedingungen möglichst gering zu halten, kann die Messung der Rauhigkeit innerhalb von weniger als einer Minute nach Abschluss des Kalibrierungsschritts, insbesondere von weniger als 30 Sekunden, bevorzugt von weniger als 10 Sekunden, besonders bevorzugt von weniger als 5 Sekunden, weiter bevorzugt von weniger als 3, 2 oder 1 Sekunde(n) erfolgen. Ein solcher kurzer Zeitraum zwischen der Kalibrierung und der eigentlichen Messung beschleunigt nicht nur die Prozesse bei der Ermittlung der Rauhigkeit, sondern verringert darüber hinaus den Einfluss der Umgebungsbedingungen, da zwischen Kalibrierung und Messung sich die Umgebungsbedingungen nicht wesentlich verändern.

Das erfindungsgemäße Verfahren kann ferner das Dimensionieren einer Bewehrung in Abhängigkeit von der gemessenen Rauhigkeit der Bauteiloberfläche umfassen. Ein solches Dimensionieren kann computergestützt und/oder automatisiert erfolgen. Durch die Kenntnis der Rauhigkeit der Oberfläche jedes einzelnen gefertigten Bauteils kann ein maßgeschneidertes Dimensionieren der Bewehrung erfolgen, so dass unnötiges Material, insbesondere unnötiger Betonstahl, eingespart werden kann.

Das erfindungsgemäße Verfahren kann ferner das Einbringen einer Bewehrung, insbesondere einer individuell auf das jeweilige Bauteil in Abhängigkeit von der gemessenen Rauhigkeit dimensionierten Bewehrung, umfassen. Dabei kann auf eine zuvor in Abhängigkeit von der gemessenen Rauhigkeit ermittelte Dimensionierung der Bewehrung zurückgegriffen werden.

Die der Erfindung zugrundeliegende Aufgabe ist ferner gelöst durch ein Computerprogrammprodukt, umfassend Befehle zur Durchführung eines Verfahrens wie zuvor beschrieben.

Ferner ist die der Erfindung zugrundeliegende Aufgabe gelöst durch einen maschinenlesbaren Datenträger, auf welchem das Computerprogrammprodukt gespeichert ist.

Die der Erfindung zugrundeliegende Aufgabe wird ferner gelöst durch die Verwendung einer Messeinrichtung, welche eine Sendeeinheit, die ausgebildet ist, ein Sendesignal in Richtung einer Bauteiloberfläche zu emittieren, und eine Empfangseinheit umfasst, die ausgebildet ist, ein Rücksignal zu detektieren, welches durch Wechselwirkung des Sendesignals mit der Oberfläche des Grundbauteils entsteht, zum berührungslosen Messen der Rauhigkeit einer Bauteiloberfläche. Insbesondere kann die Messeinrichtung zur Durchführung eines Verfahrens gemäß der Erfindung verwendet werden.

Die Sendeeinheit kann ausgebildet sein, ein Sendesignal in Form von elektromagnetischer Strahlung, insbesondere von elektromagnetischer Strahlung mit einer Wellenlänge von 400 nm bis 780 nm zu emittieren. Bevorzugt ist die Sendeeinheit ausgebildet, ein Sendesignal in Form von Laserstrahlen und/oder Radarstrahlen zu emittieren. Die Sendeeinheit kann ausgebildet sein, eine Lidar-Messung und/oder eine Radar-Messung durchzuführen. Ferner kann die Sendeeinheit ausgestaltet sein, ein Sendesignal wie im Zusammenhang mit dem Verfahren wie zuvor beschrieben zu emittieren.

In weiterer Ausgestaltung kann die Empfangseinheit eine Kamera, insbesondere mehrere voneinander beabstandete Kameras, bevorzugt genau zwei voneinander beabstandete Kameras umfassen. Die Kameras können als TOF-Kameras ausgebildet sein. Ferner können die Kameras ausgebildet sein, die Oberfläche eines Bauteils mit einer Auflösung kleiner als 5 mm, insbesondere kleiner als 3 mm, bevorzugt kleiner als 2,5 mm, besonders bevorzugt kleiner als 2 mm, weiter bevorzugt kleiner als 1,5, kleiner als 1, und/oder kleiner als 0,6 mm aufzunehmen bzw. zu erfassen.

Die Messeinrichtung kann integral ausgebildet sein und ein Gehäuse umfassen, in welchem die Sendeeinheit und die Empfangseinheit, insbesondere mehrere Kameras, untergebracht sind. Die Messeinrichtung kann ferner eine Rechnereinheit umfassen, mit der die Rücksignale, welche durch die Empfangseinheit detektiert werden, ausgewertet und weiterverarbeitet werden. Insbesondere kann die Rechnereinheit ausgestaltet sein, ausgehend von dem detektierten Rücksignal einen Rauhigkeitswert, insbesondere die Profilkuppenhöhe R_{P} oder die Rauhigkeit nach Kaufmann R_{T}, zu ermitteln, und/oder an ein Visualisierungsgerät zu übermitteln.

Für die weitere Ausgestaltung der Erfindung wird auf die Unteransprüche sowie auf die nachstehende Beschreibung eines Ausführungsbeispiels unter Bezugnahme auf die Zeichnung verwiesen. In der Zeichnung zeigt:

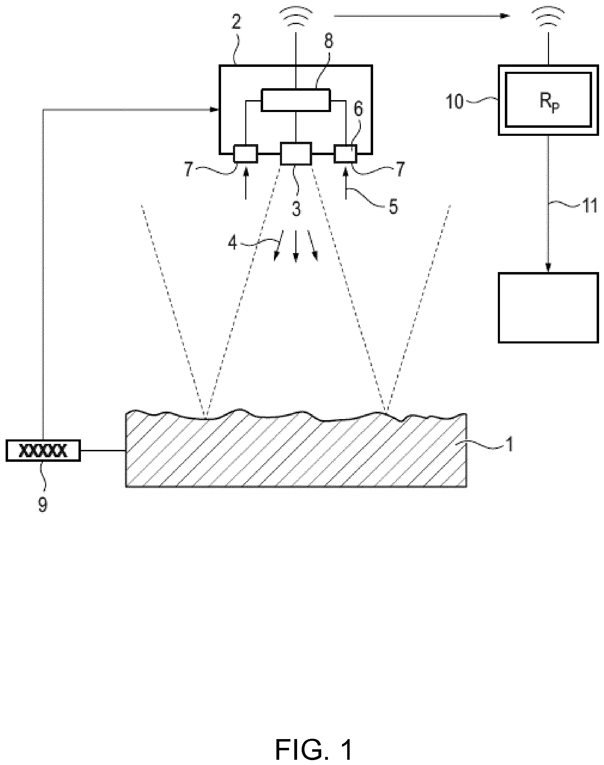

- Figur 1: den Ablauf des erfindungsgemäßen Verfahrens in einer schematischen Darstellung.

Die Figur 1 zeigt ein Verfahren gemäß der vorliegenden Erfindung zum berührungslosen Messen der Rauhigkeit einer Oberfläche eines Bauteils 1, welches vorliegend schematisch in einer Schnittansicht dargestellt ist. Dabei handelt es sich vorliegend um einen Abschnitt eines Betonfertigteils, welches mit der in der Figur 1 oben dargestellten Oberfläche an einem anderen Bauteil unter Bildung einer Schubfuge angebracht werden soll.

Zum Messen der Rauhigkeit wird eine Messeinrichtung 2 verwendet, die in einem Abstand von etwa 5 m zur Oberfläche des Bauteils 1 angeordnet ist. Die Messeinrichtung 2 umfasst eine Sendeeinheit 3, welche ein flächiges, rasterförmiges Sendesignal 4 (dargestellt durch Pfeile) in Richtung der Oberfläche des Bauteils 1 emittiert. Vorliegend handelt es sich um eine Lidar-Messung, wobei ein flächiges Lasersignal emittiert wird.

An der Oberfläche des Bauteils 1 wird das Sendesignal 4 reflektiert, so dass ein Rücksignal 5, welches ebenfalls in Form von Pfeilen dargestellt ist, sich in Richtung der Messeinrichtung 2 bewegt.

Zum Detektieren des Rücksignals 5 umfasst die Messeinrichtung 2 eine Empfangseinheit 6, welche vorliegend zwei zueinander beabstandete Kameras 7 umfasst. Die beiden Kameras 7 sind jeweils auf einander gegenüberliegenden Seiten der Sendeeinheit 3 angeordnet und mit einer Rechnereinheit 8 der Messeinrichtung 2 verbunden. Durch die Messeinrichtung 2 kann die Oberfläche des Bauteils 1 vermessen werden. Konkret werden dabei Daten einer Punktwolke erzeugt, d.h. jedem Punkt des Rasters auf der Oberfläche des Bauteils 1 wird ein Wert für die Lage des Punkts senkrecht zur Oberfläche zugeordnet.

In einem weiteren Schritt wird in der Rechnereinheit 8 der Messeinrichtung 2 ausgehend von dem detektieren Rücksignal 5 ein Rauhigkeitswert, beispielsweise die Profilkuppenhöhe R_{P}, ermittelt. Dieser Rauhigkeitswert wird dem vermessenen Bauteil 1 über eine Identifikationsnummer 9 zugeordnet und gemeinsam mit der Identifikationsnummer 9 an ein Visualisierungsgerät, vorliegend ein Tablet 10, drahtlos übermittelt.

Ausgehend von dem Rauhigkeitswert und der Identifikationsnummer 9 kann auf dem Tablet 10 in einem weiteren Schritt 11 die Bewehrung, welche beim Verbauen des Bauteils 1 vorgesehen ist, dimensioniert werden.

Das schnelle Messen der Rauhigkeit durch eine flächige Messung der Oberfläche des Bauteils 1 ermöglicht es, jedes beispielsweise in einem Fertigteilwerk hergestellte Betonfertigteil im Hinblick auf die Rauhigkeit zu messen und davon ausgehend eine individuelle, maßgeschneiderte Bewehrung, insbesondere einen Bewehrungsplan, zu erstellen, so dass eine erhebliche Materialeinsparung insbesondere an Betonstahl realisiert werden kann. Störungen der Messung durch Umgebungseinflüsse wie Staubentwicklung oder Feuchtigkeit können weitgehend ausgeschlossen werden.

Gleichzeitig ermöglicht das schnelle Messen eine 100%- Kontrolle in einer Serienfertigung, beispielsweise in einem Fertigteilwerk, und eine umfassende, bauteilbezogene Dokumentation. Die Einhaltung technischer Regelwerke oder bautechnischer Zulassung kann durch das Verfahren auf einfache Weise überwacht werden.

### Bezugszeichenliste

- 1: Bauteil
- 2: Messeinrichtung
- 3: Sendeeinheit
- 4: Sendesignal
- 5: Rücksignal
- 6: Empfangseinheit
- 7: Kamera
- 8: Rechnereinheit
- 9: Identifikationsnummer
- 10: Tablet
- 11: Dimensionieren der Bewehrung

## Patentansprüche

1. Verfahren, insbesondere computergestütztes Verfahren, zur berührungslosen Messung der Rauhigkeit einer Bauteiloberfläche, insbesondere der Oberfläche eines Bauwerks oder eines Betonbauteils, bevorzugt der Oberfläche einer Schubfuge,
wobei eine beabstandet zur Bauteiloberfläche angeordnete Messeinrichtung (2) verwendet wird, welche ein Sendesignal (4) in Richtung der Bauteiloberfläche emittiert und ein Rücksignal (5) detektiert, welches durch Wechselwirkung des Sendesignals (4) mit der Bauteiloberfläche entsteht und durch welches die Oberflächentopographie der Bauteiloberfläche erfasst wird,
**dadurch gekennzeichnet, dass** ein flächiges Sendesignal (4) in Richtung der Bauteiloberfläche emittiert wird und eine unmittelbare flächige Messung der Rauhigkeit der Oberfläche stattfindet.

2. Verfahren nach Anspruch 1, **dadurch gekennzeichnet, dass** die Messung der Rauhigkeit durch eine optische Abstandsmessung, insbesondere durch eine Lidar-Messung und/oder durch eine Radar-Messung erfolgt.

3. Verfahren nach Anspruch 1 oder 2, **dadurch gekennzeichnet, dass** ein rasterförmiges, insbesondere ein rechteckrasterförmiges Sendesignal (4) emittiert wird.

4. Verfahren nach Anspruch 3, **dadurch gekennzeichnet, dass** die Rasterweite des Sendesignals (4) kleiner als 10 cm, insbesondere kleiner als 5 cm, bevorzugt kleiner als 3 cm, besonders bevorzugt kleiner als 1 cm, weiter bevorzugt kleiner als 5 mm, kleiner als 3 mm, kleiner als 2,5 mm, kleiner als 2 mm, kleiner als 1,5 mm, kleiner als 1 mm und/oder kleiner als 0,6 mm ist.

5. Verfahren nach einem der vorherigen Ansprüche, **dadurch gekennzeichnet, dass** das Sendesignal (4) in Form von elektromagnetischer Strahlung, insbesondere von elektromagnetischer Strahlung mit einer Wellenlänge zwischen 400 nm und 780 nm, emittiert wird.

6. Verfahren nach Anspruch 5, **dadurch gekennzeichnet, dass** das Sendesignal (4) in Form von Laserstrahlen und/oder Radarstrahlen emittiert wird.

7. Verfahren nach Anspruch 5, **dadurch gekennzeichnet, dass** das Sendesignal (4) nicht in Form von Laserstrahlen emittiert wird.

8. Verfahren nach einem der vorherigen Ansprüche, **dadurch gekennzeichnet, dass** das Sendesignal (4) einen Sendeimpuls oder mehrere nacheinander emittierte Sendeimpulse umfasst, und/oder
dass als Rücksignal (5) das an der Bauteiloberfläche reflektierte und/oder das von der Bauteiloberfläche rückgestreute Sendesignal (4) detektiert wird, und/oder
dass die Laufzeit (Time of Flight) des Sendesignals (4) und des Rücksignals (5) ermittelt wird, und/oder
dass die Messeinrichtung (2), insbesondere eine Sendeeinheit (3) der Messeinrichtung (2), welche das Sendesignal (4) emittiert, und/oder eine Empfangseinheit (6) der Messeinrichtung (2), welche das Rücksignal (5) detektiert, während des Messens der Rauhigkeit der Bauteiloberfläche in einem Abstand von mindestens 1 m, bevorzugt mindestens 2 m und/oder höchstens 8 m, bevorzugt höchstens 6 m zur Oberfläche des Grundbauteils angeordnet ist/sind.

9. Verfahren nach einem der vorherigen Ansprüche, **dadurch gekennzeichnet, dass** zum Detektieren des Rücksignals (5) mindestens eine Kamera (7), insbesondere mehrere voneinander beabstandete Kameras (7), bevorzugt genau zwei zueinander beabstandete Kameras (7) verwendet werden, wobei, insbesondere, als Kamera (7) mindestens eine TOF- Kamera verwendet wird.

10. Verfahren nach einem der vorherigen Ansprüche, **dadurch gekennzeichnet, dass** ausgehend von dem detektierten Rücksignal (5) ein Rauhigkeitswert, insbesondere die Profilkuppenhöhe R_{P} oder die Rauhigkeit nach Kaufmann R_{T}, bevorzugt in einer Rechnereinheit (8) der Messeinrichtung (2), ermittelt wird, wobei, insbesondere, der ermittelte Rauhigkeitswert dem vermessenen Bauteil (1), bevorzugt über eine Identifikation des Bauteils (1), besonders bevorzugt über eine Identifikationsnummer (9) oder -bezeichnung, auf einem Speichermedium zugeordnet wird oder der Rauhigkeitswert an ein Speichermedium zum Zuordnen zu dem vermessenen Bauteil (1) übermittelt wird.

11. Verfahren nach einem der vorherigen Ansprüche, **dadurch gekennzeichnet, dass** der ermittelte Rauhigkeitswert an ein Visualisierungsgerät, insbesondere ein Tablet (10) oder Smartphone, insbesondere drahtlos übermittelt wird.

12. Verfahren nach einem der vorherigen Ansprüche, **dadurch gekennzeichnet, dass** vor der Messung der Rauhigkeit ein Kalibrierungsschritt durchgeführt wird, wobei, insbesondere, für den Kalibrierungsschritt ein Raster-Reflektionsverfahren verwendet wird, bei welchem ein Sendemuster auf die Bauteiloberfläche projiziert wird und ein Empfangsmuster erfasst wird, und/oder wobei, insbesondere, die Messung der Rauhigkeit innerhalb von weniger als einer Minute nach Abschluss des Kalibrierungschritts, insbesondere von weniger als 30s, bevorzugt von weniger als 10s, besonders bevorzugt von weniger als 5s, weiter bevorzugt von weniger als 3s, 2s oder 1s stattfindet.

13. Computerprogrammprodukt, umfassend Befehle zur Durchführung eines Verfahrens nach einem der vorherigen Ansprüche.

14. Maschinenlesbarer Datenträger, auf welchem das Computerprogrammprodukt nach Anspruch 13 gespeichert ist.

15. Verwendung einer Messeinrichtung (2), welche eine Sendeeinheit (3), die ausgebildet ist, ein Sendesignal (4) in Richtung einer Bauteiloberfläche zu emittieren, und eine Empfangseinheit (6) umfasst, die ausgebildet ist, ein Rücksignal (5) zu detektieren, welches durch Wechselwirkung des Sendesignals (4) mit der Oberfläche des Grundbauteils entsteht, zum berührungslosen Messen der Rauhigkeit einer Bauteiloberfläche, insbesondere zur Durchführung eines Verfahrens nach einem der Ansprüche 1 bis 12.
